# EUROPEAN PATENT APPLICATION

(11) **EP 1 022 917 A2**
(43) Date of publication of application: **26.07.2000**
(21) Application number: 00101206.1
(22) Date of filing: 21.01.2000
(51) Int. Cl.: H04Q 7/30

(54) **Mobile radio unit, base station radio unit, and recording medium therefor**

(30) Priority: 22.01.1999 JP 1497999
(71) Applicant: Mitsubishi Materials Corporation, Chiyoda-ku, Tokyo 100-004 (JP)
(72) Inventor: Kazuyoshi, Tari, Mitsubishi Materials Corporation, Omiya-shi, Saitama 330-0835 (JP); Hiroyuki, Unoki, Mitsubishi Materials Corporation, Omiya-shi, Saitama 330-0835 (JP); Tumoru, Nagira, Mitsubishi Materials Corporation, Omiya-shi, Saitama 330-0835 (JP)
(74) Representative: HOFFMANN - EITLE

(57) **Abstract**

A base station radio unit (4-1, 4-2, 4-3) and a mobile radio unit (5a), capable of using a radio circuit with high efficiency. The base station radio unit (4-1, 4-2, 4-3), when learning, on the basis of first data constituting a send packet, that second data subsequent to the first data indicates a connection request, sends busy information immediately. The base station radio unit (4-1, 4-2, 4-3) and the mobile radio unit (5a), on the basis of a data length of data intended to be sent and included in the second data, continuously receive data, sent from a sending side radio unit (4-1, 4-2, 4-3, 5a) afterwards, throughout the data length, and further terminate the connection with the sending side radio unit (4-1, 4-2, 4-3, 5a) upon the reception of the data having the data length.

## Description

### BACKGROUND OF THE INVENTION

### 1. Field of the Invention

The present invention relates to a base station radio unit (which will be referred to hereinafter as a base station radio) forming a component of a radio communication system utilizing a network such as the Internet, and to a movable mobile radio unit (which will be referred to hereinafter as a mobile radio) which establishes radio communications with this base station radio.

### 2. Description of the Related Art

This applicant proposed a radio communication system (Japanese Patent Application No. 10-262099) to be used for connections of terminal units (each of which will be referred to hereinafter as a terminal) to the Internet through the use of radio communication techniques. A feature of this radio communication system is as follows.

This radio communication system incorporates at least one radio server connected to the Internet and a base station radio(s) connected to this radio server and designed to make radio communications with a mobile radio(s) connected to a terminal(s), wherein the connection of the terminal to the Internet takes place with one of these radio servers (at least one) functioning as a home radio server so that the communication with the mobile radio is made in the radio-communicable area of the base station radio belonging to the home radio server.

In addition, when establishing the connection of the aforesaid terminal, the foregoing radio server is provided with a terminal authentication managing means for transacting the authentication of the connection for this terminal in response to a registration request from the same terminal and a terminal managing means for issuing an IP address available at that time to perform the registration about the connection of this terminal in accordance with the IP address issuing request from the same terminal.

Still additionally, when a terminal makes a registration request to a radio server(s) other than the home radio server, the foregoing radio server sends, through the Internet, a request for the authentication of the connection and the issue of an IP address to a home server to which this terminal pertains. If the authentication of the connection and the issue of the IP address have taken place by the home radio server, the aforesaid radio server permits the connection between the radio server other than the home server and the foregoing terminal.

Moreover, the foregoing radio server is equipped with a routing means which, when a terminal is in connection with a radio server other than the home radio server, at the time that packet data directed to this terminal has arrived at a radio server to which this terminal was connected before, transfers this packet data to the radio server, with which this terminal is in connection, on the basis of an IP address coming from the home radio server.

Still moreover, in a state where a terminal is in connection with a radio server other than the home radio server, when packet data addressed to this terminal is transferred from a radio server, the foregoing radio server reports the information about the radio server to which this terminal is connected at this time to the host on the Internet side which transmitted this packet data. Additionally, packet data to be transmitted after this report is sent directly to the radio server being in connecting relation to the terminal without passing through the radio server connected in the past.

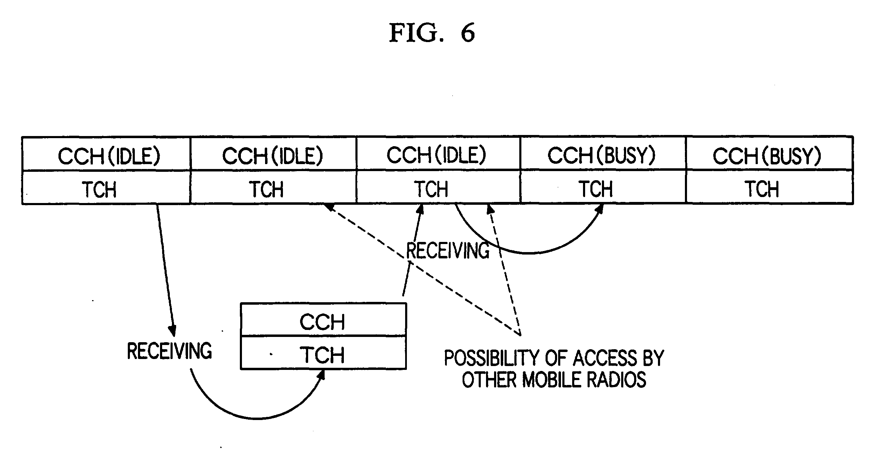

The LTR (Logic Trunked Radio) has been known as another radio communication system. This LTR is made up of a repeater (base station) and a plurality of mobile units. Principally, the LTR is for audio communications, and its channel configuration is composed of a control channel (CCH) and a traffic channel (TCH), with a sub-band of the traffic channel being used as the control channel. In this case, as FIG. 6 shows, a period of time corresponding to at least two frames is taken until a mobile radio confirms a CCH (idle) issued from a base station radio to issue a connection request CCH to the base station radio and then the base station radio receives this CCH and confirms the connection request to get into a busy condition (a state of establishing a connection with some mobile unit).

For this reason, if one mobile radio first gains access in these two frames, that mobile radio, which will detect an idle condition afterwards, encounters difficulty in access to a base station radio. Additionally, taking a period of time corresponding to at least two frames before getting into a busy condition leads accordingly to wastefulness of the radio circuit. Still additionally, because its principle function is for handling audio communications, difficulty is experienced in learning the completion of communication (the end of conversation) beforehand; hence, for the completion of the communication, further use of a radio circuit resource becomes necessary, such as the implementation of a circuit disconnecting operation or the setting of a hold time.

### SUMMARY OF THE INVENTION

Accordingly, the present invention has been developed in consideration of these situations, and it is an object of the invention to provide a base station radio and a mobile radio, capable of utilizing a radio circuit with high efficiency.

In addition, the mobile radio and the base station radio according to this invention is provided with a function to detect a channel with high efficiency, that is, this invention provides a mobile radio capable of detecting a receivable channel through the use of previously obtained signal (electric field) intensity information when the mobile radio is in an out-of-district (gets out of the communicable area) and further provides a base station radio made to send an information added packet for detecting a peripheral base station radio closer thereto on a preferential basis.

### BRIEF DESCRIPTION OF THE DRAWINGS

Other object and features of the present invention will become more readily apparent from the following detailed description of the preferred embodiments taken in conjunction with the accompanying drawings in which:
FIG. 1 is an illustration of configurations of a mobile radio and a base station radio according to an embodiment of this invention;
FIG. 2 is an illustration of a frame structure;
FIG. 3 is an illustration of one example of timing of communication between the mobile radio, related to a mobile radio connection request, and a base station;
FIG. 4 is an illustration useful for describing a conventional method of making data resending request, and a data resending request method employed in this embodiment;
FIG. 5 is an illustration useful for explaining answering of a plurality of mobile radios;
FIG. 6 is an illustration of a send channel structure according to a conventional method, and a response (answering) from a base station;
FIG. 7 is a block diagram showing a configuration of a radio communication system according to an embodiment;
FIG. 8 is an illustration useful for explaining a packet sending procedure in this embodiment;
FIG. 9 is a flow chart showing the packet sending procedure in this embodiment;
FIG. 10 is a flow chart showing the packet sending procedure in this embodiment;
FIG. 11 is a flow chart showing the packet sending procedure in this embodiment;
FIG. 12 is a flow chart showing the packet sending procedure in this embodiment;
FIG. 13 is an illustration useful for describing an address issuing procedure in this embodiment;
FIG. 14 is an illustration useful for describing a terminal authenticating operation in this embodiment; and
FIG. 15 is an illustration useful for describing the terminal authenticating operation in this embodiment.

### DESCRIPTION OF THE PREFEERRED EMBODIMENTS

Embodiments of the present invention will be described hereinbelow with reference to the drawings.

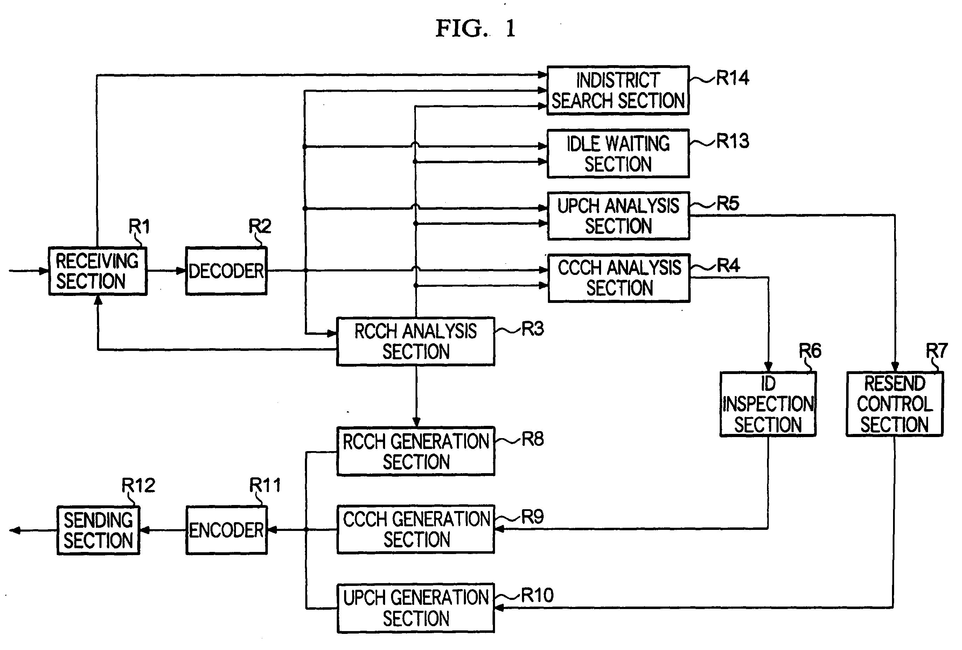

FIG. 1 is an illustration of configurations of a mobile radio and a base station radio according to an embodiment of this invention. The mobile radio and the base station radio according to this embodiment is applicable to the radio communication system described in the "Related Art", and one type thereof will be described in detail later.

First of all, a description will be given hereinbelow of the outline of this embodiment. In a radio communication system based upon the mobile radio and the base station radio according to this embodiment, a single frequency channel is employed for each of upstream and downstream communications between the mobile radio and the base station radio. Accordingly, a control channel (CCH) carrying a control signal and a traffic channel (TCH) taking care of data use an identical frequency. Additionally, the base station radio employs a duplex operation while the mobile radio employs a simplex operation, that is, a half-duplex system is taken. The base station radio sends a transmission packet (downstream information) at all times. The communication between the base station radio and the mobile radio is based upon the DSMA (Digital Sense Multiple Access). The DSMA is of the type of receiving, as a digital signal, information about idle/busy conditions of the traffic channel (TCH) and of establishing communications by learning the idle/busy condition through an analysis result.

Secondly, a description will be given hereinbelow of a transmission packet to be sent from the mobile radio and the base station radio (In the following description, these will be referred to simply as a radio when a discrimination is not made therebetween).

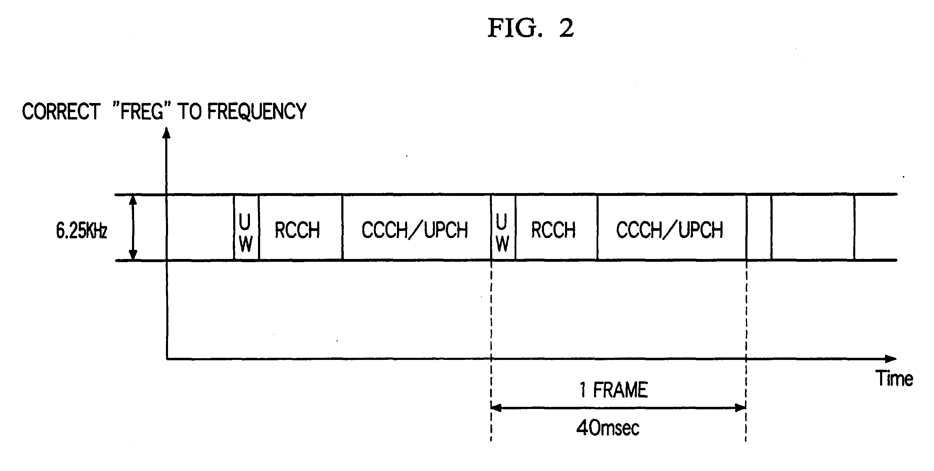

As FIG. 2 shows, to a send channel for each of radios there are successively sent transmission packets each of which has a set of UW and RCCH and a set of CCCH or UPCH following the set of UW and RCCH in one frame. The UW (Unique Word: synchronization word) is a bit string to be used for frame synchronization, and is at the leading position of each of the frames. Incidentally, the UW is defined as a bit string having a specific value. The RCCH (Radio Control Channel) represents a radio circuit condition (idle/busy) and includes information (ID) on designation of a radio of destination and information on the CCCH/UPCH subsequent thereto. The RCCH sent from a base station radio is to be received by all mobile radios.

The CCCH (Common Control Channel) includes control information (calling request, connection request and others) and a data length of data to be sent. The CCCH to be sent from the base station radio can include peripheral base station information including channel information on peripheral base stations and other information, with one or more mobile radios designated with the RCCH receive the CCCH. The UPCH (User Packet Channel) comprises data to be sent to a data receiving radio (addressee), and when it is sent from a base station radio, one or more mobile radios designated by the RCCH receive the UPCH.

Incidentally, the RCCH corresponds to the first data defined in claims, while the CCCH and UPCH correspond to the second data therein.

Furthermore, a description will be given hereinbelow of configurations of the mobile radio and the base station radio according to this embodiment, and of operations of parts thereof. In this embodiment, the configuration of the mobile radio is the same as that of the base station radio.

In this embodiment, the radio is basically made up of a receiving section R1 made to receive an input signal and connected to an RCCH analysis section R3, a decoder R2 connected to the receiving section R1, an RCCH analysis section R3 connected to the decoder R2, a CCCH analysis section R4 connected to the decoder R2 and further to the RCCH analysis section R3, a UPCH analysis section R5 likewise connected to the decoder R2 and further to the RCCH analysis section R3, an ID inspection section R6 connected to the CCCH analysis section R4, a resend control section R7 connected to the UPCH analysis section R5, an RCCH generation section R8 connected to the RCCH analysis section R3, a CCH generation section R9 connected to the ID inspection section R6, a UPCH generation section R10 connected to the resend control section R7, an encoder R11 connected to the RCCH generation section R8, the CCCH generation section R9 and the UPCH generation section R10, and a sending section R12 connected to the encoder R11. In this embodiment, also included are an idle waiting section R13 connected to the decoder R2 and the RCCH analysis section R3 and an indistrict search section R14 connected to the receiving section R1, the decoder R2 and the RCCH analysis section R3.

The receiving section R1 receives a radio signal (transmission packet) and outputs the received data, and even detects a field strength of the received signal and outputs field strength data.

The decoder R2 makes analysis on which of the RCCH, the CCCH and the UPCH corresponds to the received data, and transfers the received data to one of the RCCH analysis section R3, the CCCH analysis section R4 and UPCH analysis section R5 in accordance with the received data itself.

The RCCH analysis section R3 analyzes the RCCH, and if the analysis result shows that the received packet is addressed to its pertaining station (its own self), controls the receiving section R1 to further receive the CCCH/UPCH subsequent to the RCCH. In this case, the term " addressed to its pertaining station" signifies that the received packet is directed independently to the radio it pertains to, that the received packet is addressed to a group including the radio it pertains to, and that the received packet is reported to all mobile radios.

On the other hand, if the analysis result shows that the received packet is not directed to its pertaining station, the RCCH analysis section R3 controls the idle waiting section R13 and the indistrict search section R14 to perform the idle waiting and the indistrict search, which will be described later, for a term of the CCH/UPCH. These idle waiting and the indistrict search are not performed simultaneously, but one of them is selectively implemented through proper setting. Additionally, the RCCH analysis section R3 switches the reception channel of the receiving section R1 in the indistrict search, and gives a timing signal for the storage of field strength data to the indistrict search section R14.

Moreover, in the base station radio, upon receipt of an RCCH accompanying a connection request from a mobile radio, the RCCF analysis section R3 controls the RCCH generation section R8 so that busy information is added to the RCCH to be sent immediately from its pertaining station. In the mobile radio, the RCCH analysis section R3 detects a transmission-allowable condition on the basis of the busy information included in the RCCH. The idle condition signifies the transmission-allowable condition, while the busy condition means a transmission-unallowable condition. Furthermore, when indexes corresponding to the distances from the base station radio is included in channel information stored in the CCCH analysis section R4 which will be described later, the RCCH analysis section R3 sequences the search channels on the basis of the distance information depending on the indexes in an operation of acquiring the field strength, and controls the receiving section R1 to first receive the send channel of a base station radio closer thereto. This is because a high probability exists in that a mobile radio lying in the district of a base station radio being connected currently thereto moves into the communicable area of a base station radio closer to the base station radio being currently connected thereto.

The CCCH analysis section R4 analyzes a message included in the CCCH. In accordance with the message, when a transmission is needed, the CCCH analysis section R4 checks an ID (a destination identifier) included in the CCCH and sends predetermined information. For example, in the case of the base station radio, the CCCH analysis section R4 sends a connection permission after the reception of a connection request or sends a registration permission after the reception of an authentication response. Additionally, on the basis of the data length of the data included in the CCCH (a connection request or the like), to be sent, the CCCH analysis section R4 controls the receiving section R1 to successively receive a subsequent frame string (a set of frames having a designated data length and constituting a block of data; a UPCH composed of data to be sent is included in each of the frames). Still additionally, when receiving peripheral base station information, the CCCH analysis section R4 makes a storage section (not shown) store channel information (frequency or the like) included in the peripheral base station information.

The UPCH analysis section R5 analyzes the data included in the UPCH. If this data has a mistaken portion and the error correction is impossible, the UPCH analysis section R5, after receiving the frame string, controls the resend control section R7 to send a resend request for re-sending the mistaken portion.

The ID inspection section R6 checks whether the ID included in the CCCH is correct or not.

The resend control section R7 controls the UPCH generation section R10 so that a resend request is included.

The RCCH generation section R8 generates an RCCH to be sent. At this time, when needed, the RCCH generation section R8 refers to information from the RCCH analysis section R3.

The CCCH generation section R9 generates a CCCH to be sent. At this time, when needed, the CCCH generation section R9 refers to information from the CCCH analysis section R4, which is obtained through the ID inspection section R6.

The UPCH generation section R10 generates a UPCH to be sent. At this time, when needed, the UPCH generation section R10 refers to information from the UPCH analysis section R3, obtained through the resend control section R7.

The encoder R11 arranges a synchronization UW, an RCCH produced by the RCCH generation section R8 and a CCCH produced by the CCCH generation section R9 or a UPCH produced by the UPCH generation section R10 in order, thereby constructing one frame of a transmission packet.

The sending section R12 sends the transmission packet handed over from the encoder R11.

The idle waiting section R13 performs an idle waiting operation (sleep, cease of operation) for a term of the CCCH/UPCH under the control of the RCCH analysis section R3, thereby cutting the power consumption.

The indistrict search section R14 also performs an indistrict search for a term of the CCCH/UPCH under the control of the RCCH analysis section R3. In this case, the "indistrict search" signifies an operation in which, when a packet sent from a base station radio is not directed to its pertaining station, the send channels transmitted from peripheral base stations are successively scanned for a term of the CCCH/UPCH subsequent to the RCCH to obtain their radio wave field strengths. The indistrict search section R14 puts field strength data, outputted from the receiving section R1, in a storage section (not shown). As an example, it is possible to store the average of ten field strengths detected channel by channel in the past, or to store the highest of the ten field strengths in the past. Incidentally, the indistrict search section R14 retains the channel information about the principal base station radios in a storage section (not shown). Additionally, the base station transmits peripheral base station information including channel information periodically, while the indistrict search section R14 further stores this information to utilize these channel information for the indistrict search.

If the aforesaid indistrict search is made to obtain the field strengths of the radio waves transmitted from the peripheral base station radios, when the mobile radio gets out of the district of a base station radio being connected currently thereto by means of radio communication, the channels of the base station radios exhibiting a send/receive possible field strength can be scanned in accordance with the degree of the field strength (in the order of decreasing intensity) on the basis of the field strength data stored in the storage section in the middle of the foregoing processing. Thus, it is possible to eliminate the need for scanning the send/receive impossible channels, which allows the channels of the base station radios, which can enter the district, to be detected at a high speed.

That is, the mobile radio according to this invention also has a function to, if making a decision that a send packet including received first data is not directed to its own self (its pertaining station), spontaneously receive a send channel of another peripheral base station radio lying in the communicable range within the time of sending of the following second data without receiving the second data, and detect and acquire the field strength of this send channel.

In addition, the mobile radio according to this invention also has a function to, if making a decision that the send packet including the received first data is not addressed to its own self (its pertaining station), spontaneously acquire and store channel information about another peripheral base station radio existing in the communicable range within the time of sending of the aforesaid following second data without receiving the second data in accordance with the number of packets, needed for the communication, obtained from the first data and receive the send channel of the another peripheral base station radio on the basis of this channel information.

Still additionally, the mobile radio according to this invention also has a function to, when storing the detected and acquired information about the field strength of the aforesaid send channel and getting out of the communicable range of the aforesaid base station radio, make a decision on a base station to be communicated therewith in consideration of the degree of the field strength.

Moreover, the mobile radio according to this invention also has a function to, if making a decision that the send packet including the received first data is not directed to its own self, spontaneously takes a sleep mode in accordance with the number of packets, needed for the communication, obtained from the first data, thereby cutting the power consumption.

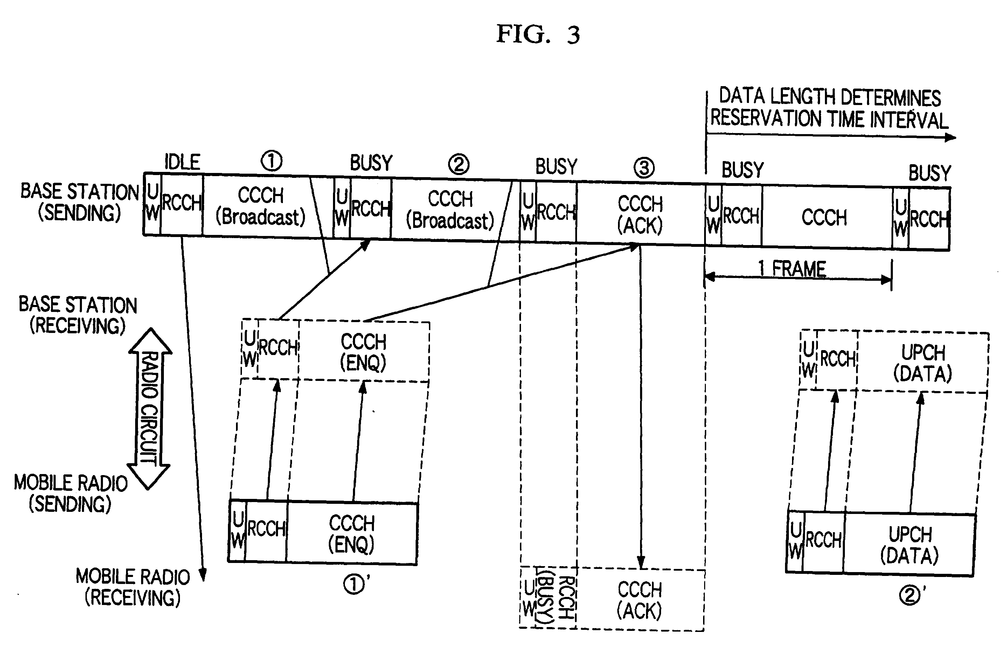

Furthermore, referring to FIG. 3, a description will be given hereinbelow of operations of the mobile radio and the base station radio to be conducted for when the mobile radio (mobile station) issues a connection request to the base station radio (base station).

The receiving section R1 of the mobile radio first receives an RCCH included in a send packet 1(circled) sent from the base station radio. This RCCH passes through the decoder R2 to reach the RCCH analysis section R3. The RCCH analysis section R3 analyzes the RCCH and recognizes that the base station is in the idle condition. Subsequently, the RCCH generation section R8 and the CCCH generation section R9 produce data for a send packet 1' (circled) including a connection request (ENQ) CCCH, and the encoder R11 produces the send packet 1' through synthesis, with the send packet 1' being sent from the sending section R12. Incidentally, the connection request includes the data length of the data to be sent.

The receiving section R1 of the base station radio receives a send packet 1' (circled) sent from the mobile radio. An RCCH included in this send packet 1' is transferred through the decoder R2 to the RCCH analysis section R3. The RCCH analysis section R3 analyzes this RCCH and recognizes that this send packet 1' forms a connection request. This recognition is made with the information indicating that the subsequent data is a CCCH of a connection request being included in the RCCH. The RCCH generation section R8 immediately inserts busy information into an RCCH included in a send packet 2 (circled) to be sent after a send packet 1 (circled); in consequence, another mobile radio does not have access. Incidentally, a CCCH included in this send packet 2 does not have a particular sense.

Furthermore, the receiving section R1 of the base station radio further receives a CCCH subsequent to the RCCH of the send packet 1'. This CCCH is sent through the decoder R2 to the CCCH analysis section R4 so that the CCCH analysis section R4 accepts this connection request.

Following this, the CCCH generation section R9 of the base station radio puts a connection response (ACK) in a CCCH. The encoder R11 puts this CCCH in a send packet 3 (circled) and forwards it to the mobile radio which issued the connection request. Additionally, on the basis of the data length included in the previous connection request, a reception period of time needed for the reception of at least a frame string is reserved for receiving intended data (frame string) to be sent from the mobile radio. That is, for this period of time, the base station radio puts busy information in an RCCH and forwards the send packet to prevent other mobile radios from gaining access.

For example, when the data length to be sent is taken to be n and the bit length which can be put in an UPCH is taken as m (bit), a reception period of time needed for the reception of a frame string of at least [n/m] is reserved, where [ ] depicts a function to raise values below a decimal point. Additionally, because a time for receiving the send packet 1' and a time for sending the send packet 3 become necessary after the base station radio sets a busy condition as shown in FIG. 3, as well as the time to be taken for the reception of the frame string of [n/m], it is appropriate that the busy information is put in the RCCH also in a term (in this case, a time corresponding to two frames) needed before the reception of data, and a send packet is sent in this state.

Upon receipt of the send packet 3 including the connection response from the base station radio, the receiving section R1 of the mobile radio forwards the RCCH and the CCCH through the decoder R2 to the RCCH analysis section R3 and the CCCH analysis section R4. At this time, if the CCCH analysis section R4 analyzes that the CCCH forms a connection response, the RCCH generation section R8 and the UPCH generation section R10 produce data constituting a frame string having a predetermined data length. The encoder R11 synthesizes these data into a frame string and forwards the synthesis result.

The foregoing is the operations of the mobile radio and the base station mobile to be conducted for when the mobile radio forwards a connection request to the base station radio.

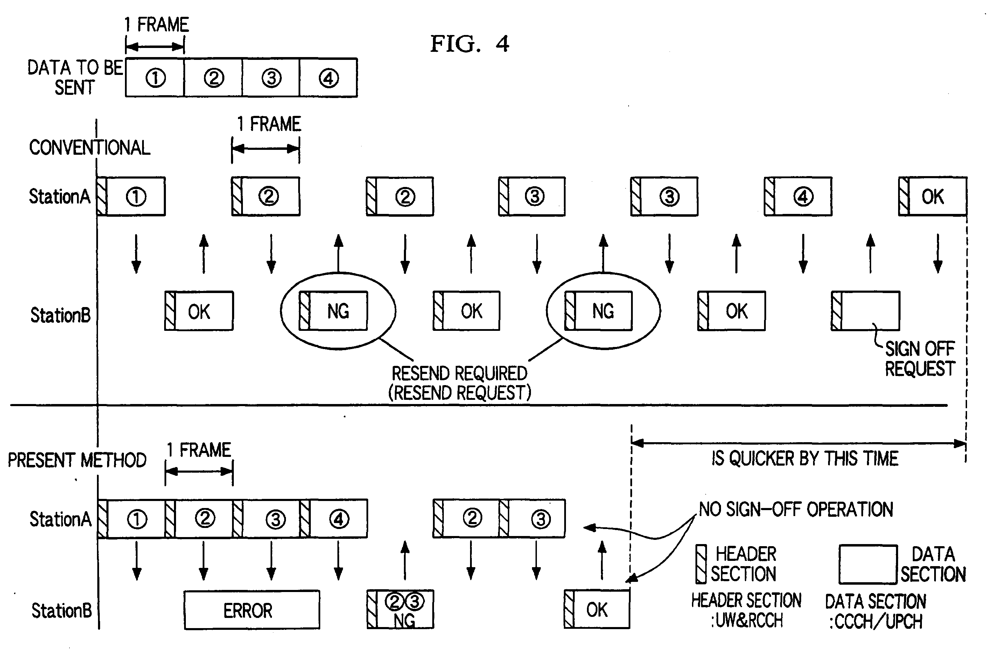

Secondly, referring to FIG. 4, a description will be given hereinbelow of a method of making communications between the mobile radio and the base station radio according to this embodiment, in comparison with a conventional method.

FIG. 4 shows a response from each station in the case in which data of four frames is transferred from a Station A to a Station B. One of the Stations A and B forms a mobile radio, while the other forms a base station radio.

In FIG. 4, according to a conventional method shown on the upper side, data is forwarded from the Station A to the Station B in unit of one frame. The Station B sends a reception response (OK) to the Station B at every reception of each frame or forwards a resend request if the data contains an error (frames 2 (circled) and 3 (circled)). Lastly, the Station B sends a sign-off request.

On the other hand, according to the present method shown on the lower side of FIG. 4, the Station A continuously transmits data corresponding to four frames. The Station B previously receives the data length of the data to be sent and learns that data length, on the basis of a CCCH of a connection request sent from the Station A as mentioned above, and receives the data corresponding to four frames continuously. After the ordinary reception, if, on the mistaken frames 2 and 3, the UPCH analysis section R5 detects the errors but the correction thereof is impossible, the resend control section R7 makes the Station A send a send packet including a resend request. The Station A receives the resend request from the Station B and then resends the frames 2 and 3 required. Furthermore, if the frames 2 and 3 are received normally, the Station B returns a reception response, thereafter terminating the series of operations.

According to this system, since the data length of the data to be sent is forwarded in advance to the destination, as compared with the conventional method, it is possible to decrease the number of times of reception response and the number of times of issue of resend request, thus accomplishing the communications with high efficiency. Additionally, there is no need for the sign-off operation unlike the conventional method.

The above is the difference of this system from the conventional method.

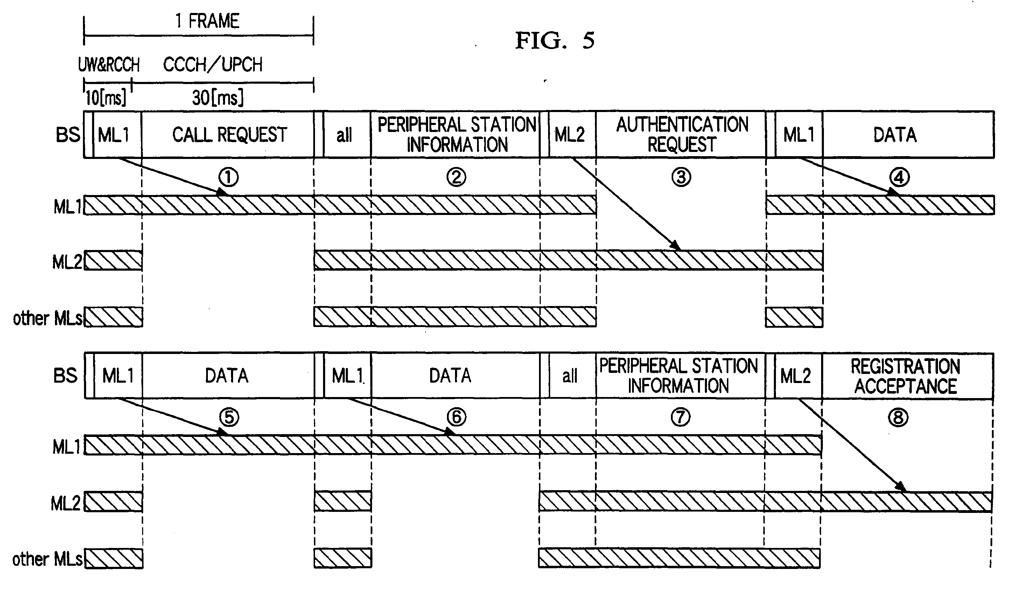

Furthermore, referring to FIG. 5, a description will be given hereinbelow of responses of mobile radios ML1, ML2 and otherMLs in connection with a packet sent from a base station radio BS.

A frame 1 (circled) is a call request directed to the mobile radio ML1, and the RCCH analysis section R3 of each of the mobile radios analyzes an RCCH, so that only the mobile radio ML1 receives a CCCH (call request) subsequent to the RCCH. At this time, in the other mobile radios ML2 and otherMLs, the idle waiting section R13 or the indistrict search section R14 performs the idle waiting or the indistrict search.

The next frame 2 (circled) are directed to all the mobile radios, and the RCCH analysis section R3 of each of the mobile radios analyzes the RCCH; as a result, all the mobiles receives a CCCH (peripheral base station information).

A frame 3 (circled) forms an authentication request directed to the mobile radio ML2, and the RCCH analysis section R3 of each of the mobile radios analyzes the RCCH; in consequence, only the mobile radio ML2 receives the CCCH (authentication request). At this time, in the other mobile radios ML1 and otherMLs, the idle waiting section R13 or the indistrict search section R14 implement the idle waiting or the indistrict search.

Following this, frames 4, 5 and 6 (each circled) including data addressed to the mobile radio ML1 are sent, and the RCCH analysis section R3 of each of the mobile radios analyzes the RCCH, and only the mobile radio ML1 receives it. The mobile radio ML1 learns, from the data length of data, to be sent, included in the call request CCCH of the previous frame 1, that the data to be sent corresponds to three frames, and receives the data corresponding to three frames continuously. In the meantime, in the other mobile radios ML2 and otherMLs, the idle waiting section R13 or the indistrict search section R14 performs the idle waiting or the indistrict search.

The subsequent frame 7 (circled) is addressed to all the mobile radios, and the RCCH analysis section R3 of each of the mobile radios analyzes the RCCH, and all the mobile radios the receive the CCCH (peripheral base station information).

The last frame 8 (circled) is a registration acceptance directed to the mobile radio ML2, and the RCCH analysis section R3 of each of the mobile radios analyzes the RCCH; hence, only the mobile radio ML 2 receives the CCCH (registration acceptance). At this time, in the other mobile radios ML1 and otherMLs, the idle waiting section R13 or the indistrict search section R14 performs the idle waiting or the indistrict search.

The above description relates to one example of response of each of the mobile radios to a packet transmitted from the base station radio.

Referring to the drawings, a description will be given hereinbelow of an embodiment of a radio communication system to which the mobile radio and the base station radio according to this invention are applicable.

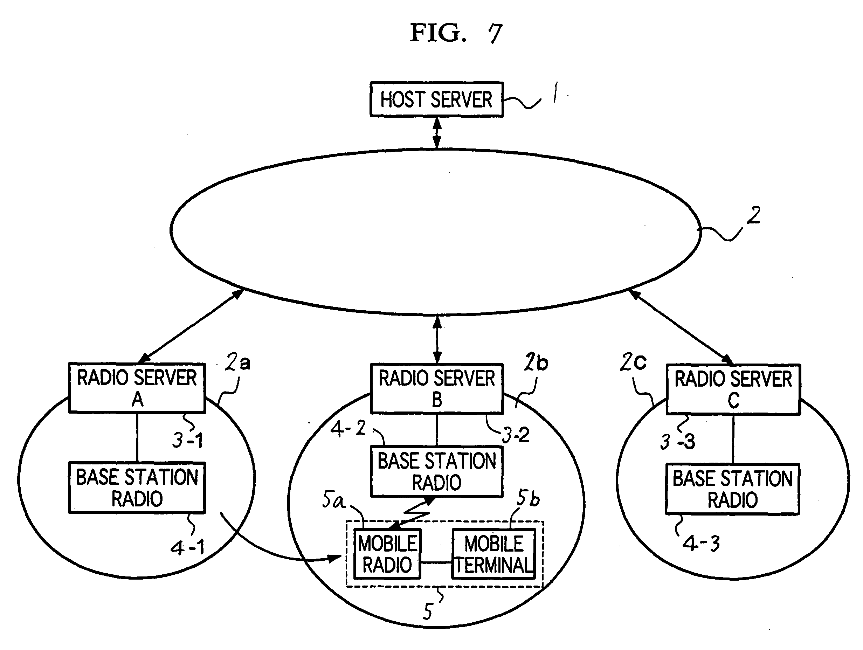

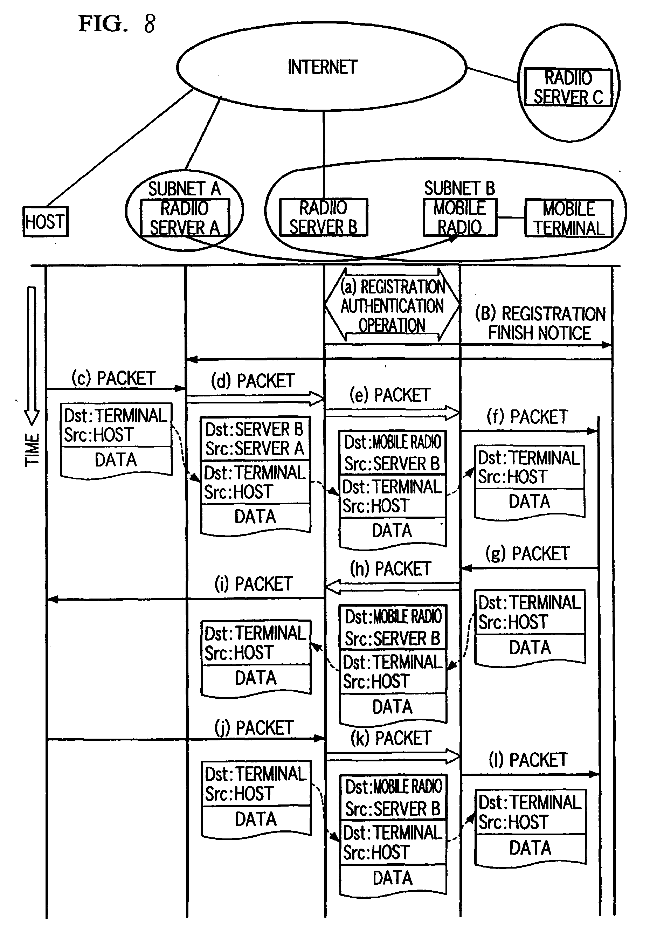

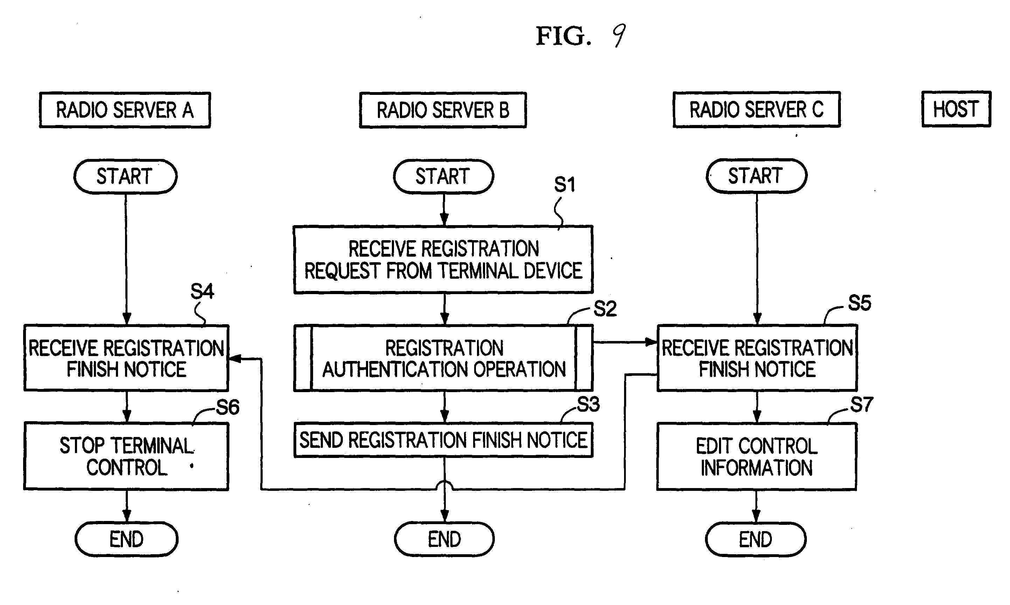

FIG. 7 is a block diagram showing a configuration of this embodiment. In this illustration, reference numeral 1 represents a host server, numeral 2 depicts a network with which the host server 1 is in connection, numerals 3-n designate radio servers connected to the network 2, numerals 2a, 2b and 2c denote subnetwork constructed under the control (management) of the radio servers 3-n, and numerals 4-n signify vase station radios connected to the radio servers 3-n. A plurality of base station radios 4-n are connected to one radio server 3-n. In the illustration, only one base station radio 4-n is shown to one radio server 3-n. Numeral 5 indicates a terminal device connected through radio communication to the radio server 3-n, and is composed of a mobile radio (which will be referred to hereinafter as a mobile device) 5a which establishes communication with the base station radio 4-n by means of radio, a computer terminal (which will be referred to as a terminal) 5b connected to the mobile device 5a.

Incidentally, the host server 1 can also be a radio server which makes communication with the terminal by radio, and is not always required to have a radio communication function.

For the terminal device 5, any one of the radio servers 3-n connected to the network 2 acts as a home server. In this case, let it be assumed that, in FIG. 7, the home server for the terminal device 5 is the radio server C3-3.

The above-mentioned radio servers X, Y, the base station radios A, B and the mobile radio M correspond to two of the radio servers 3-n (n = 1, 2, ^{xxx}), two of the base station radios 4-n (n = 1, 2, ^{xxx}), and the mobile device 5a, respectively.

Referring to FIGs. 7 to 15, a description will be given hereinbelow of an operation of the communication system according to this embodiment.

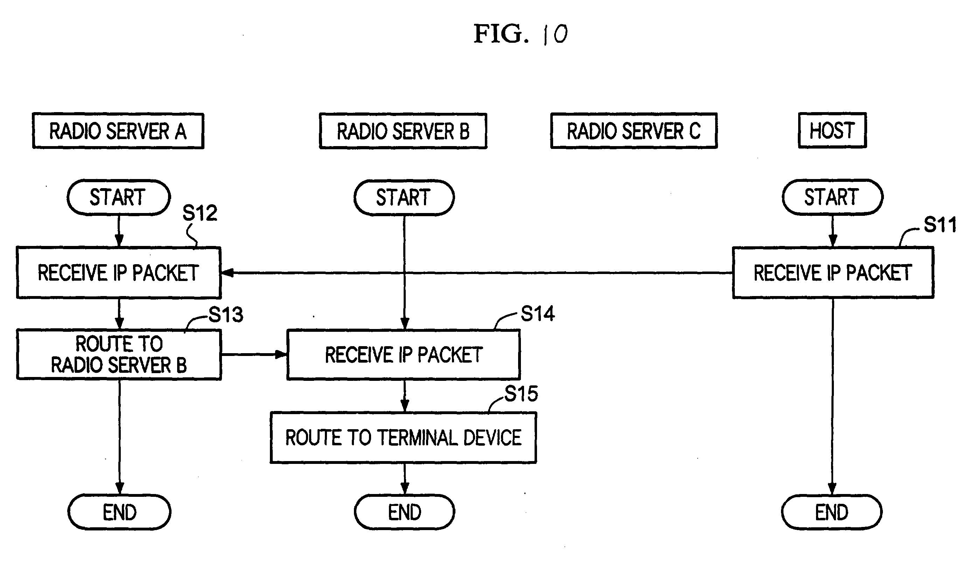

FIG. 8 is an illustration useful for describing an operation of the radio communication system to be conducted in accordance with the time variation. In FIG. 8, "Dst" represents a destination, while "Src" designates a source.

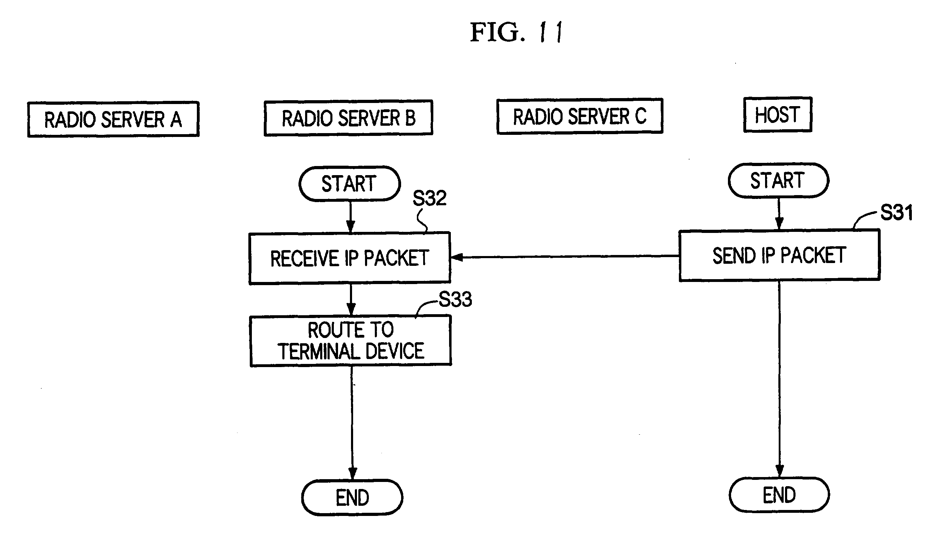

FIGs. 9, 10, 11 and 12 are flow charts showing an operational procedure of the radio communication system.

In this case, let it be assumed that the home server for the terminal device 5 is the radio server C3-3 and at the present time, the terminal device 5 is in operation under the control of the radio server A3-1.

First of all, a description will be made of an operation to be conducted for when the terminal device 5 moves from the subnetwork 2a of the radio server A3-1 to the subnetwork 2b of the radio server B3-2.

First, the terminal device 5 makes a request for a terminal registration authentication and issue of an IP address to the radio server B3-2 (see (a) of FIG. 8 and a step S1 of FIG. 9). In response to this request, the radio server B3-2 performs the registration authentication and the issue of the IP address (see (a) of FIG. 8 and a step S2 of FIG. 9); therefore, the terminal device 5 can operate under the control of the radio server B3-2.

The registration authentication operation and the IP address issuing operation will be described herein later.

Following this, the radio server B3-2 notifies the radio server C3-3 forming the home server of the fact that the terminal device 5 shifts from under the control of the radio server A3-1 to under the control of the radio server B3-2 and the registration authentication comes to finish (see (b) of FIG. 8 and a step S3 of FIG. 9).

Subsequently, in accordance with the registration finish notice from the radio server B3-2, the radio server C3-3 forming the home server notifies the radio server A3-1 of the fact that the terminal device 5 gets under the control of the radio server B3-2 (a step S5 of FIG. 9). Accordingly, the radio server A3-1 receives the registration finish notice (a step S4 of FIG. 9) and stops the control of the terminal device 5 (a step S6 of FIG. 9). Additionally, the radio server C3-3 (home radio server) records that the terminal device 5 is placed under the radio server B3-2 and edits (updates) the control information (a step S7 of FIG. 9).

Since the notification of the shifting of the terminal device 5 is made through the radio server C3-3 to the radio server A3-1, it is possible to learn the radio server which controls the terminal device 5 after the shifting.

This operation enables the terminal device 5 to get under the control of another radio server.

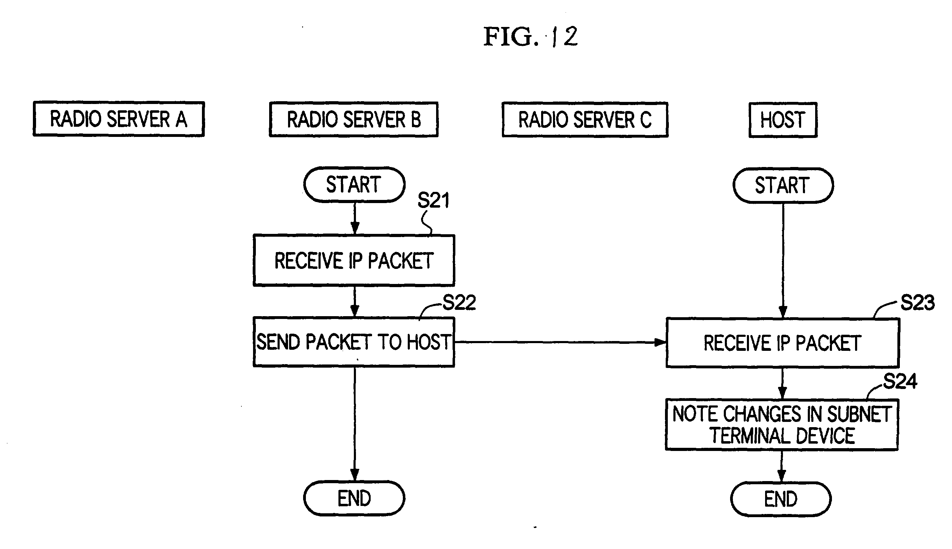

Furthermore, referring to FIGs. 8 and 10, a description will be given hereinbelow of an operation for the host server 1 to send a packet to the terminal device 5.

First, the host server 1 sends an IP packet through the network 2 (a step S11 of FIG. 10). At this time, because the host server 1 does not know the fact that the terminal device 5 is under the control of the radio server B3-2, the send packet from the host server 1 is sent to the radio server A3-1 to which the terminal device 5 was connected in the past (see (c) of FIG. 8).

Following this, the radio server A3-1 receives this packet (a step S12 of FIG. 10), and establishes the routing to the radio server B3-2 so that this packet is forwarded to the radio server B3-2 (a step S13 of FIG. 10 and (d) of FIG. 8), and the radio server B3-2 receives this packet (a step S14 of FIG. 10). Additionally, the radio server B3-2 establishes the routing to the mobile device 5a of the terminal device 5 under the control thereof (a step S15 of FIG. 10) and sends it to the mobile device 5a (see (e) of FIG. 8). Still additionally, this packet is forwarded to the terminal 5b (see (f) of FIG. 8).

Accordingly, the terminal device 5 can receive the packet sent from the host server 1.

Moreover, referring to FIGs. 8, 11 and 12, a description will be given hereinbelow of an operation of sending a packet from the terminal device 5 to the host server 1.

First, the terminal 5b sends a packet to the mobile device 5a (see (g) of FIG. 8). Subsequently, the mobile device 5a transmits the received packet through the radio server B3-2 (see (h) of FIG. 8.

Then, the radio server B3-2 receives this packet (a step S21 of FIG. 11) and sets up the route to the host server 1 so that the IP packet obtained from the terminal device 5 is forwarded to the host server 1 (see (i) of FIG. 8, a step S22 of FIG. 11).

Following this, the host server 1 receives this packet (a step S23 of FIG. 11). At this point of time, the host server 1 can learn, from the source address of this packet, that the terminal device 5 is under the control of the radio server B3-2 (a step S24 of FIG. 11); therefore, the succeeding packet sending to the terminal device 5 is conducted directly through the radio server B3-2.

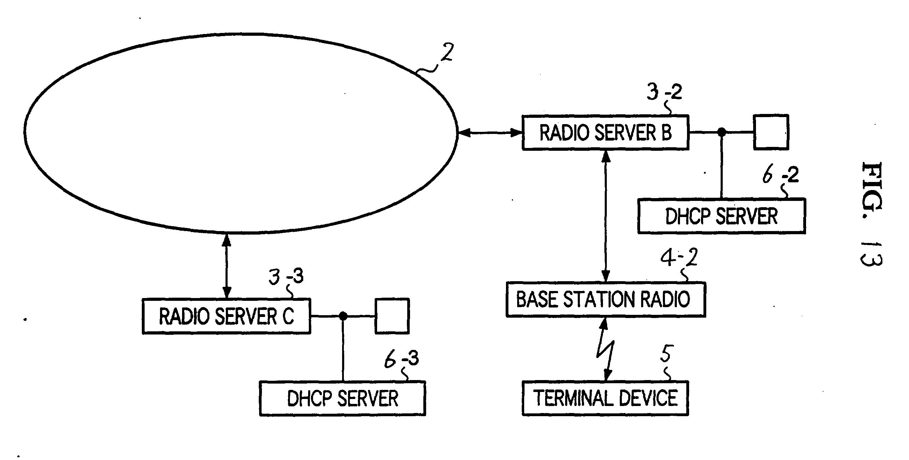

In the case in which a packet is transmitted from the host server 1 to the radio server B3-2, the packet is first sent to the radio server B3-2 (see (j) of FIG. 8, a step S31 of FIG. 12).

Subsequently, the radio server B3-2 receives this packet (a step S32 of FIG. 12) and establish the routing to the terminal device 5 (a step S33 of FIG. 12) for transmission to the mobile device 5a (see (k) of FIG. 8). Then, this packet is forwarded to the terminal device 5 (see (1) of FIG. 8).

As described above, since the IP packet is transferred at the time of the send/receive of a packet with respect to the terminal device 5, there is no need to notify all the hosts of the movement of the terminal device 5 whenever the terminal device 5 moves, thus preventing the traffic from being centered at the communication circuit.

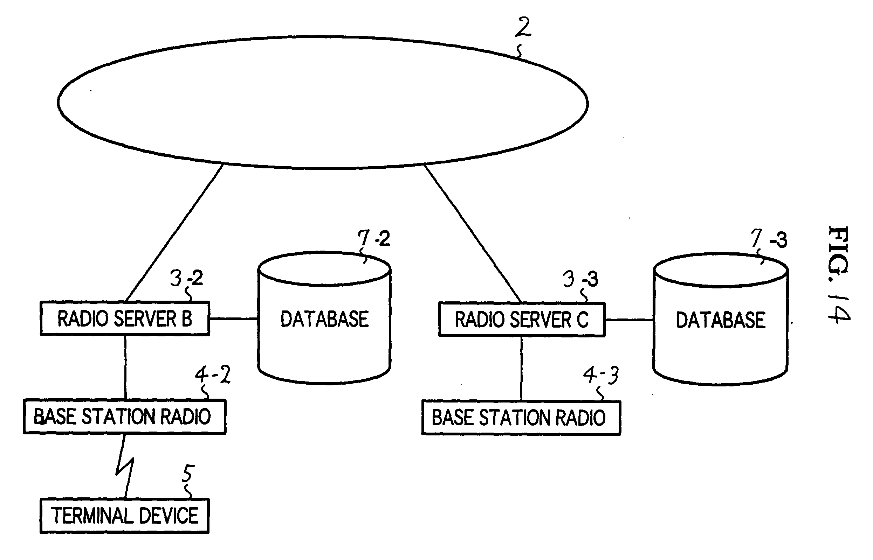

Still furthermore, referring to FIG. 13, a description will be given hereinbelow of an operation of issuing an IP address.

First, at the time of moving into the communicable area of the radio server B3-2, the terminal device 5 sends an IP address issuing request to the radio server B3-2.

Next, the radio server B3-2 detects the home radio server of the terminal device which has made the request (in this case, the home server is the radio server C), and makes an IP address issuing request to this radio server C3-3.

After this, an IP address allocation request is sent to a DHCP server 6-3 (an IP address issuing server) connected to the radio server C3-3 (home server). In response to this request, the DHCP server 6-3 issues an IP address available at the present time, and communicates this issued IP address to the radio server C3-3.

Following this, the radio server C3-3 gives the issued IP address through the radio server B3-2 to the terminal device 5.

Incidentally, if the radio server B3-2 is the home server for the terminal device 5, the DHCP server 6-2 may issue the IP address.

With this operation, the IP address issued by the radio server C3-3 can be used to the terminal device 5 operating under the control of the radio server B3-2, and the terminal device 5 is, so to speak, under the control of the radio server C3-3, and a packet can be sent through the radio server B3-2 to the terminal device 5.

Thus, in response to an IP address issuing request from the terminal device 5, even if the radio server to be connected thereto at present is not the home radio server, the home radio server issues an IP address by way of this radio server; hence, the connection to the other radio servers becomes possible without changing the setting of the IP address for the terminal device 5.

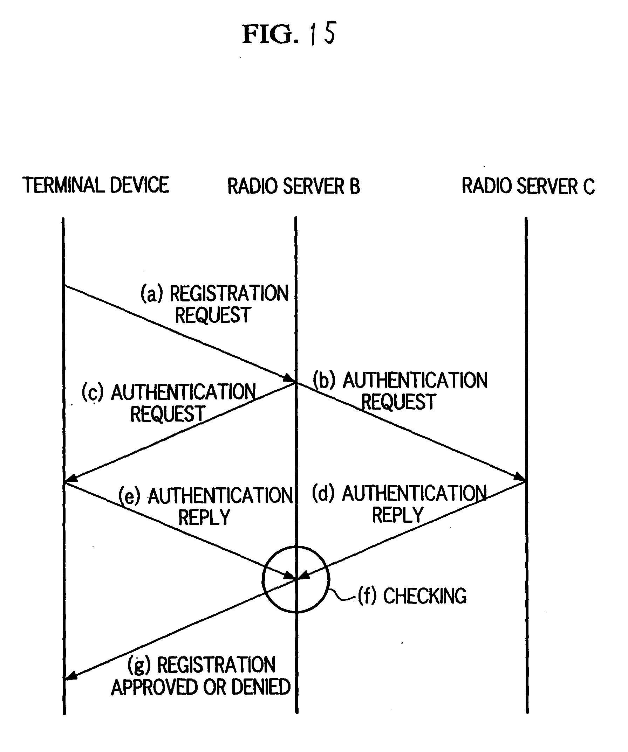

Moreover, referring to FIGs. 14 and 15, a description will be given hereinbelow of a registration authentication operation.

First, the terminal device 5 sends a registration request (see (a) of FIG. 15) and an identification number, the terminal device 5 has, to the radio server B3-2.

Subsequently, the radio server B3-2 checks whether or not the authentication data of the terminal device 5 which issued the request exists in a database 7-2 connected to the radio server B3-2. If the check result shows that the authentication data does not exist in the database 7-2, a decision is made that this terminal device 5 is not the terminal device 5 using the radio server B3-2 as its home server, and the home server of this terminal device 5 is detected on the basis of the received identification number so that an authentication request is forwarded to this home server (in this case, the radio server C3-3) (see (b) of FIG. 15).

At this time, the authentication request is made in a state where added are a random value produced by the radio server B3-2 and the identification number of the terminal device 5 which made the registration request. This random value is also transmitted to the terminal device 5 (see (c) of FIG. 15).

Following this, the radio server C3-3 forming the home server receives the authentication request and, at the same time, makes an authentication processing calculation using the received random value and the received identification number.

Then, the radio server C3-3 returns the authentication processing result to the radio server B3-2 (see (d) of FIG. 15).

On the other hand, the terminal device 5 performs an authentication processing calculation using the random value from the radio server B3-2 and returns this result to the radio server B3-2 (see (e) of FIG. 15).

Thereafter, the radio server B3-2 checks the authentication processing results from the radio server C3-3 and the terminal device 5 (see (f) of FIG. 15). Subsequently, if the check result indicates that these authentication results are identical to each other, the radio server B3-2 approves the registration request (see (g) of FIG. 15). On the other hand, if the check result indicates no coincidence therebetween, the radio server B3-2 considers the registration request to be improper and, hence, rejects the registration request.

On the other hand, in the case in which the authentication data exists in the database 7-2, since this radio server is the home server, the authentication operation can perform only the "registration request" ((a) of FIG. 15), the "authentication request" ((c) of FIG. 15), the "authentication response" ((e) of FIG. 15) and the "registration acceptance" ((g) of FIG. 15).

As described above, even in the case in which the terminal device 5 is not under the control of the radio server forming the home server, the terminal registration authentication is feasible.

Incidentally, with the use of the foregoing radio communication system, the mobile terminal can make communications at the place it moves to, and the radio communication system is applicable to message communications (electronic mail, netnews, FTF (File Transfer Protocol)), voice mail, web delivery, CTI (Computer Telephony Integration: Internet telephone), broadcast communications, telemetering, ITS (Intelligent Transport System: transportation system for highway) and others. Additionally, if using a routing function, it is also applicable to push type communications.

As described above, according to this radio communication system, since one radio server is designed to function as a home server with respect to terminal devices and the authentication of terminal connection and the issue of an IP address are made from this home server, the terminal device can make communication even in other than the area of the home server.

In addition, according to this radio communication system, even if the radio server supposed to be connected at present is not the home server, in response to an IP address issuing request, the IP address is issued from the home radio server through that radio server; therefore, the terminal device can be connected to another radio server without changing the setting of the IP address for the terminal device.

Still additionally, according to this radio communication system, since an IP packet is transferred at the time of the implementation of the send/receive of a packet to/from a terminal device, there is no need to notify all the hosts of the movement of the terminal device 5 whenever the terminal device 5 moves; therefore, it is possible to prevent the traffic from being centered at the communication circuit.

Although the base station radio according to this invention and the radio communication system to which the base station radio is applicable have been described as an embodiment, this invention is not limited to this embodiment.

Incidentally, this invention is also applicable to LAN and dial-up type networks in addition to the internet and intranet.

Moreover, it is also appropriate that a send packet receiving program for realizing the send packet receiving function of the mobile radio and the base station radio according to this invention is recorded on a recording medium readable by a computer, and the program recorded on this recording medium is read in a computer system so that the computer system runs the program for reception of the send packet in the mobile radio and in the base station radio.

That is, this send packet receiving program makes a computer fulfill a function to analyze a packet sent from the mobile radio or the base station radio for acquiring a data length of data intended to be sent, included in the packet, a function to receive data with the data length continuously, a function to decide whether or not the received data includes an error for, when the error correction of the data is impossible, making a request for resend of the data corresponding to the data including the error to the sending side mobile radio or base station radio, and a function to cut off the connection when the acquisition of the data having the data length comes to completion.

In this case, the term "computer system" includes OSs and hardware such as peripheral devices. Additionally, the term "recording medium readable by a computer" signifies potable mediums such as a floppy disk, a magneto-optical disk, a ROM and a CD-ROM and a storage device such as a hard disk to be incorporated into a computer system. Still additionally, the term "recording medium readable by a computer", for example, includes a communication line to be used for when a program is transmitted through a network such as the inernet or a communication circuit such as a telephone circuit, which retains the program dynamically for a short period of time and, in this case, further includes a volatile memory in the interior of a computer system constituting a server or a client, which retains the program for a constant period of time. Furthermore, it is also appropriate that the foregoing program is of a type of realizing a portion of the aforesaid functions or that the foregoing program is of a type of realizing the aforesaid functions in cooperation with the program already recorded in the computer system.

Although the embodiments of this invention have been described above with reference to the drawings, it should be understood that the concrete configuration is not limited to these embodiments, and it is intended to cover designs and others which do not constitute departures from the spirit and scope of the invention.

As described above in detail, with the mobile radio and the base station radio according to this invention, since, on the basis of the data length of data supposed to be sent, included in the second data from a sending side radio, the data to be sent afterwards is received continuously over the data length and the connection with the sending side radio is cut off by the reception of the data with the data length, it is possible to reduce the reception response and it is possible to eliminate the need for the circuit disconnecting operation, thus achieving the communications with high efficiency.

In addition, after the data is received ordinarily, since a request for resend of the send packet in which an error has occurred is issued to the base station radio, it is possible to decrease the number of times of resend request and further to achieve efficient communications.

Still additionally, the base station radio according to this invention analyzes the first data constituting the send packet sent from the mobile radio and, when making a decision that the second data subsequent to the first data forms a connection request, immediately forwards a send packet in which busy information is included in the first data sent from the base station radio; therefore, it is possible to enhance the communication efficiency, and further to prevent the mobile radios other than the mobile radio which issued the connection request from gaining access to the base station radio.

## Claims

1. A mobile radio unit which makes radio communication with a base station radio unit (4-1, 4-2, 4-3) so that a terminal device (5) establishes internet connection with a radio communication system composed of at least one radio server (3-1, 3-2, 3-3) connected to the internet and said base station radio unit (4-1, 4-2, 4-3) connected to said radio server (3-1, 3-2, 3-3) to make communication by radio, characterised in that said mobile radio unit receiving first data, including destination information, constituting a send packet sent from said base station radio unit (4-1, 4-2, 4-3) to make a detection of a destination and a decision on said destination, and when making a decision that said send packet is addressed to its own self, analyzing second data subsequent to said first data and constituting said send packet to, on the basis of a data length of data included in said second data and intended to be sent from said base station radio unit (4-1, 4-2, 4-3), continuously receive data, sent from said base station radio unit (4-1, 4-2, 4-3) afterwards, throughout said data length, and further terminating said connection with said base station radio unit (4-1, 4-2, 4-3) at the reception of said data corresponding to said data length.

2. A mobile radio unit according to claim 1, characterised by further comprising a function to make a decision as to whether or not an error exists in the received data, and to, if correction of said error in said data is impossible, issue a request for resend of said send packet, in which said error occurred, to said base station radio unit (4-1, 4-2, 4-3).

3. A mobile radio unit according to claim 1, characterised by further comprising a function to, if a decision is made that the received send packet including said first data is not addressed to its own self, spontaneously receive a send channel of another base station radio unit (4-1, 4-2, 4-3), whose communicable range is close to a communicable range of said base station radio unit (4-1, 4-2, 4-3), in a communicable range within a sending time of said second data without reception of said subsequent second data for detecting and acquiring a field strength of the received send channel.

4. A mobile radio unit according to claim 1, characterised by further comprising a function to, when a decision is made that the received send packet including said first data is not addressed to its own self, spontaneously acquire and store channel information another base station radio unit (4-1, 4-2, 4-3), whose communicable range is close to a communicable range of said base station radio unit (4-1, 4-2, 4-3), within a sending time of said subsequent second data without reception of said second data in accordance with the number of packets needed for the communication and obtained from said first data for receiving a send channel of said another base station radio unit (4-1, 4-2, 4-3) on the basis of said channel information.

5. A mobile radio unit according to claim 1, characterised by further comprising a function to detect and acquire information about field strengths of send channels for storing and to, when said mobile radio unit itself gets out of a communicable range of said base station radio unit (4-1, 4-2, 4-3), determine a base station radio unit (4-1, 4-2, 4-3) to be communicated next to its own self in the order of decreasing field strength.

6. A mobile radio unit according to claim 1, characterised by further comprising a function to, when a decision is made that the received send packet including said first data is not addressed to its own self, spontaneously get into a sleep mode in accordance with the number of packets needed for the communication and obtained from said first data for cutting power consumption.

7. A mobile radio unit according to claim 1, characterised by further comprising:
a receiving section (R1) for receiving a radio signal to output received data and further for detecting a field strength of the received radio signal to output field strength data;
a PLL section (R3) connected to said receiving section (R1) for switching a reception channel of said receiving section (R1);
storage section for storing channel information on said base station radio unit (4-1, 4-2, 4-3) and field strength data;
field strength acquisition means (R14) for storing said field strength data in said storage section;
first data analysis means (R3) for acquiring a destination of the received data on the basis of said first data and for giving a timing signal for the storage of said field strength data to said field strength acquisition means (R14), and further for making said PLL section (R3) switch said reception channel of said receiving section (R1); and
second data analysis means (R9, R10) for acquiring channel information of said another base station radio unit (4-1, 4-2, 4-3) from said second data to put the acquired channel information in said storage section.

8. A base station radio unit for use in a radio communication system comprising at least one radio server (2a, 2b, 2c) connected to the internet (2) and a base station radio unit (4-1, 4-2, 4-3) connected to said radio server (3-1, 3-2, 3-3) for establishing radio communication with a mobile radio unit (5a) connected to a terminal device (5b), characterised in that said base station radio unit analyzes second data, subsequent to first data, constituting a send packet sent from said mobile radio unit (5a), and, on the basis of a data length of data included in said second data and supposed to be sent from said mobile radio unit, said base station radio unit continuously receives data, sent from said mobile radio unit (5a) afterwards, throughout said data length, and terminating the connection with said mobile radio unit (5a) at the reception of said data corresponding to said data length.

9. A base station radio unit according to claim 8, characterised in that, a decision is made as to whether or not an error exists in the received data, and if correction of said error in said data is impossible, a request for resend of a send packet in which said error occurred is made to said mobile radio unit (5a).

10. A base station radio unit for use in a radio communication system comprising at least one radio server (3-1, 3-2, 3-3) connected to the internet and a base station radio unit (4-1, 4-2, 4-3) connected to said radio server (3-1, 3-2, 3-3) for establishing radio communication with a mobile radio unit (5a) connected to a terminal device (5b), characterised in that said base station radio unit analyzes first data constituting a send packet sent from said mobile radio unit (5a), and if a decision is made that second data subsequent to said first data indicates a connection request, puts busy information in first data to be sent from its own self immediately to send a send packet to all mobile radio units on forward channel.

11. A base station radio unit according to claim 10, characterised in that an index corresponding to a distance from another base station radio unit (4-1, 4-2, 4-3) is added to channel information on said another base station radio unit (4-1, 4-2, 4-3) whose communication range is close to a communicable range of its own self, with said channel information being included in a send packet to be sent.

12. A computer readable recording medium which records a send packet receiving program for one of a mobile radio unit (5a) and a base station radio unit (4-1, 4-2, 4-3), characterised in that said send packet receiving program making a computer implement the steps of:
analyzing a packet sent from one of said mobile radio unit (5a) and said base station radio unit (4-1, 4-2, 4-3) for acquiring a data length of data intended to be sent, included in said packet;
receiving data corresponding to said data length continuously;
when a decision is made that an error exists in the received data and correction of said error in said data is impossible, issuing a request for resend of data corresponding to said data including said error to one of said mobile radio unit (5a) and said base station radio unit (4-1, 4-2, 4-3) on the sending side; and
terminating connection at the completion of acquisition of said data corresponding to said data length.
